# EUROPEAN PATENT SPECIFICATION

(11) **EP 3 751 827 B1**
(45) Date of publication and mention of the grant of the patent: **16.10.2024**
(21) Application number: 19751148.8
(22) Date of filing: 28.01.2019
(51) Int. Cl.: H04M 1/725, G06F 16/34, G06F 16/9032, G06Q 10/10, H04M 1/72436, G06Q 10/107

(54) **MESSAGE PROCESSING METHOD, UNREAD MESSAGE DISPLAY METHOD AND COMPUTER TERMINAL**
VERFAHREN ZUR NACHRICHTENVERARBEITUNG, VERFAHREN ZUM ANZEIGEN VON UNGELESENEN NACHRICHTEN UND COMPUTERENDGERÄT
PROCÉDÉ DE TRAITEMENT DE MESSAGE, PROCÉDÉ D'AFFICHAGE DE MESSAGE NON LU ET TERMINAL INFORMATIQUE

(30) Priority: 07.02.2018 CN 201810122863
(43) Date of publication of application: 16.12.2020
(73) Proprietor: ALIBABA GROUP HOLDING LIMITED, George Town, Grand Cayman (KY)
(72) Inventor: YANG, Weiwei, Hangzhou, Zhejiang 311121 (CN)
(74) Representative: McKinnon, Alistair James
(86) International application number: PCT/CN2019/073392
(87) International publication number: WO 2019/154153

(56) References cited:
- WO-A1-2018/027551
- CN-A- 101 883 186
- CN-A- 105 721 668
- CN-A- 107 005 613
- US-A1- 2005 038 863
- US-A1- 2005 262 214
- US-A1- 2012 117 161
- OWEN RAMBOW ET AL: "Summarizing email threads", 20040502; 1077952576 - 1077952576, 2 May 2004 (2004-05-02), pages 105 - 108, XP058314033, ISBN: 978-1-932432-24-4, DOI: 10.3115/1613984.1614011

## Description

The present application claims priority to China patent application no. 201810122863.4, filed on February 7, 2018 and titled "Message Processing Method, Unread Message Display Method and Computer Terminal,".

### Field of the Invention

The present application relates to a field of communication technology. In particular, it relates to a message processing method, an unread message display method, and a computer terminal.

### Background of the Invention

As communication technologies develop, an ever-increasing number of users choose to use instant communication tools (e.g., QQ or WeChat) to communicate with others. However, it is worth noting that existing instant communication tools still suffer from some defects. For example, after participating in a conference, a user may turn on his or her phone and find many unread messages, both group and single chat messages, displayed on WeChat Work. Moreover, there may already be more than 99 messages in each group, with the dialog box displaying "...". In this situation, the user is very likely to wonder whether he should open and view them or simply ignore them. Does this information in the group chat dialog actually concern me? Does this information actually need to be processed now? How urgent is it? All of the above questions will trouble the user and affect the user's use experience.

To solve the problem described above, the prior art has the following solutions: Prior Art Solution 1: Present information on the locked screen, and permit direct rightward swipe to reply. However, the following is a drawback to this solution: It is not possible to confirm the main content when multiple pieces of group or individual chat content are received. For example, with regard to multiple messages in a group chat, it is not at all clear what the content is and who the senders are. Thus, it is not possible under the current status to assess whether further steps are necessary. Prior Art Solution 2: Enter keywords in the chat interface to search for key content. However, the drawback to this solution is that it requires the user to take the initiative in searching for and locating keywords. Such behavior is a kind of active user operation, which is relatively inefficient. Clearly, the prior art solutions described above still cannot effectively solve the problem of inefficient processing of unread messages by a user in the process of using an instant messaging tool.

No effective solution has yet been put forward to address the problem described above.

WO 2018/027551 A1 describes a message display method, a user terminal and a graphic user interface. The method comprises: a user terminal detecting a pressing parameter input by a user performing a pressing operation on the user terminal; and if a first pressing parameter is greater than a first pre-set parameter and there is an unread exclusive message of a user in a group of a communication application, displaying the unread exclusive message. When implemented, a user only needs to press a user terminal, and if a pressing condition is met, the user terminal may automatically display an unread exclusive message of the user, thereby improving the convenience of viewing an exclusive message.

US 2012/117161 A1 describes a process for delegating email messages for human summaries. In the process, an email message in an inbox of an account holder can be identified, where the email message has a read status of unread. The email message can be from a sender and can comprise email content. The email message can be sent from the inbox of the account holder to a delegate. The delegate can be associated with an email address corresponding to a human who is not the account holder or the sender. A summary can be received for the email content from the delegate. The summary can be presented in a user interface to the account holder. Responsive to presenting the summary, the read status of the email message can be changed from unread to read.

US 2005/038863 A1 describes a method and system for managing email or other messaging and attachments to messages which are forwarded to devices having limited processing and memory capacity. The method includes the steps of: receiving a user configuration categorizing messages for the user by elements of the message; accessing the user message datastore upon receipt of at least one new message for the user to a user data store; comparing said at least one new message to a set of user specific rules; rendering a message summary including at least one link accessible by the processing device, the link enabling action with respect to the message when selected by the user; and outputting the message summary to a user device.

US 2005/262214 A1 describes a method and apparatus for summarizing a text message, such as an email message or a transcribed audio message. A portion of each text message, such as a sentence, is extracted as an indicative summary of the text message based on a degree of overlap of words in the sentence with a set of words, such as words in the message subject or words in a related root message. The extracted portion is based on a score for each portion of the text message, such as a sentence. An interface is also provided for presenting the indicative summaries of a set of related text messages to a user.

### Summary of the Invention

Embodiments of the present application provide an unread message display method, and a computer terminal to at least solve the technical problem of inefficient processing of unread messages by a user in the process of using an instant messaging tool.

An unread message display method according to claims 1 to 6 is provided according to one aspect of embodiments of the present application.

A processor according to claim 7 is further provided according to another aspect of embodiments of the present application.

A terminal according to claim 8 is further provided according to another aspect of embodiments of the present application.

In embodiments of the present application, unread messages are acquired from the dialog messages of an instant messaging tool, and said unread messages are summarized to obtain summarized message content of said unread messages. Said summarized message content then may be presented to a user. It is thereby possible to achieve the objectives of making it convenient for the user to efficiently process unread messages in the process of using an instant messaging tool and thus to achieve the technical result of improved user experience. The technical problem of inefficient processing of unread messages by the user while using the instant messaging tool is thus solved.

### Description of the Drawings

The drawings described here are intended to further the understanding of the present application and form a part of the present application. The illustrative embodiments of the present application and the descriptions thereof are intended to explain the present application and do not constitute inappropriate limitation to the present application. Among the drawings:
FIG. 1 is a hardware structural block diagram of a computer terminal (or mobile device) for implementing an unread message display method according to the prior art.
FIG. 2 is a human-machine interface for implementing a path determining method according to an embodiment of the present application.
FIG. 3 is a flowchart of an unread message display method according to an embodiment of the present application.
FIG. 4a is a human-machine interface diagram of an optional unread message display method according to an embodiment of the present application.
FIG. 4b is a communication record interface diagram of an optional unread message display method according to an embodiment of the present application.
FIG. 4c is a communication record interface diagram of an optional unread message display method according to an embodiment of the present application.
FIG. 4d is a communication record interface diagram of an optional unread message display method according to an embodiment of the present application.
FIG. 5 is a flowchart of an optional unread message display method according to an embodiment of the present application.
FIG. 6 is a flowchart of an optional unread message display method according to an embodiment of the present application.
FIG. 7 is a flowchart of an optional unread message display method according to an embodiment of the present application.
FIG. 8 is a structural block diagram of an unread message display means according to an embodiment of the present application.
FIG. 9 is a flowchart of a message processing method according to an embodiment of the present application.
FIG. 10 is a structural block diagram of a message processing means according to an embodiment of the present application.

### Specific Embodiments

In order to give persons skilled in the art a better understanding of the present application, technical schemes in embodiments of the present application are described clearly and completely in light of the drawings of the embodiments of the present application. Obviously, the embodiments described are merely some of the embodiments of the present application and are not all the embodiments. So long as no additional creative effort is expended, all other embodiments that are obtained by persons with ordinary skill in the art on the basis of embodiments in the present application shall fall within the scope of protection of the present application.

Please understand that the terms "first," "second," etc. in the description, claims, and drawings of the present application are used to differentiate similar objects and are not necessarily used to describe their particular sequence or order. It should be understood that data used in this way may be switched as appropriate. Thus, embodiments of the present application described herein can be implemented in sequences other than those shown or described herein. In addition, the terms "comprise" and "have" and the variations thereof are meant to be non-exclusive. For example, a process, method, system, product, or device containing a series of steps or units need not be limited to those steps or units that are clearly listed, but may comprise other steps or units that are not clearly listed or that are intrinsic to these processes, methods, products, or devices.

First of all, some of the terms that will appear in the process of describing embodiments of the present application are applied as explained below:
Neuro-linguistic programming (NLP): This belongs to fields in computer science and phonetics that focus on computer-human speech conversion. It is also translated as body-mind grammar programming or natural language processing. It refers to habits of human thinking and acting which can be changed just like computer programs may undergo software updating.
WeChat Work: This refers to a business collaboration tool that conforms to the everyday use habits of employees. Having arisen on a WeChat foundation, its main advantages are its instant communication features.
Dialog box: In a graphic user interface, the dialog box is a special window for displaying information to the user in the user interface or for acquiring user input responses when necessary, resulting in a dialog between the computer and the user: for providing the user with some information or requesting input from the user or both.

### Embodiment 1

An embodiment of an unread message display method is further provided according to an embodiment of the present application. Please note that the steps depicted in the flowcharts in the drawings can be executed in a computer system, such as a group of computers capable of executing commands. Moreover, although logical sequences are depicted in the flowcharts, the steps that are depicted or described may, in some situations, be executed in sequences other than those here.

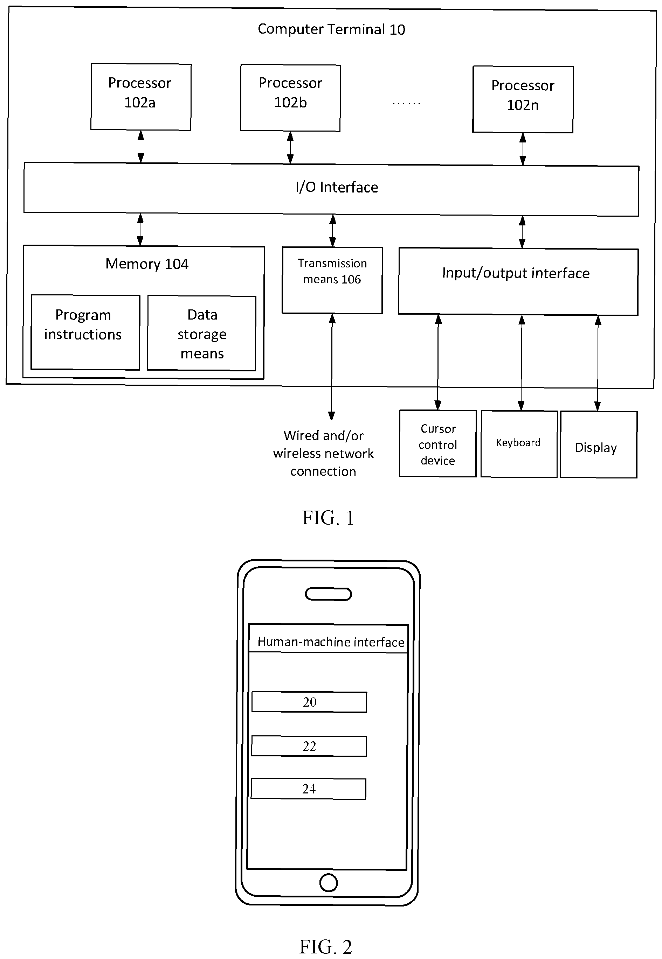

Before describing each embodiment of the present application in greater detail, we will describe, with reference to FIG. 1, a suitable computer terminal that can be used to implement principles of the present application.

FIG. 1 presents a hardware structural block diagram of a computer terminal (or mobile device) for implementing a path determining method. For descriptive purposes, the depicted structure is only one example of a suitable environment and does not impose any limit on the use scope or functions of the present application. This computer terminal should also not be interpreted as having any dependence or requirement vis-à-vis any components or combination thereof shown in FIG. 1.

The method embodiment provided by embodiment 1 of the present application may be executed on a mobile terminal, a computer terminal, or similar operating device. FIG. 1 presents a hardware structural block diagram of a computer terminal (or mobile device) for implementing an unread message display method. As shown in FIG. 1, the computer terminal 10 (or mobile device 10) may comprise one or more (indicated by 102a, 102b, ..., 102n in the drawing) processors 102 (processors 102 may include, but are not limited to, processing means such as microprocessors (MCU) or programmable logic devices (FPGA)), memory 104 for storing data, and a transmission module 106 for communication functions. In addition, it may further comprise: a display device, input/output interfaces (I/O interfaces), a universal serial bus (USB) port (may be included as a port among the I/O interfaces), a network interface, a power supply, and/or a camera. A person with ordinary skill in the art can understand that the structure shown in FIG. 1 is illustrative and does not impose restrictions on the structures of the electronic devices described above. For example, the computer terminal 10 may further comprise more or fewer components than are shown in FIG. 1 or have a configuration different from the one shown in FIG. 1.

Please note that said one or more processors 102 and/or other data processing circuits may generally be referred to as "data processing circuits" in this document. All or part of the data processing circuits may be embodied as software, hardware, firmware, or any combination thereof. In addition, a data processing circuit can be a single, independent processing module or any of the other components that are fully or partially integrated with the computer terminal 10 (or mobile device). The data processing circuits touched upon in embodiments of the present application serve as a kind of processor control (e.g., selection of variable resistance terminal paths for connecting to interfaces).

The memory 104 may be for storing app software programs and modules, such as program instructions/data storage means corresponding to unread message display methods in embodiments of the present application. By running software programs and modules stored in memory 104, the processors 102 execute various functional apps and data processing. That is, they implement unread message display methods of applications as described above. The memory 104 may comprise high-speed random access memory. It may further comprise non-volatile memory, such as one or more magnetic storage devices, flash memory, or other non-volatile solid-state memory. In some embodiments, the memory 104 may further comprise memory that is remotely disposed relative to the processor 102. Such remote memory may be connected to the computer terminal 10 via a network. Examples of the network described above include, but are not limited to, the Internet, corporate intranets, local area networks, mobile communication networks, and combinations thereof.

The transmission means 106 is for receiving or sending data via a network. Specific examples of said network may comprise wireless networks provided by communication suppliers for the computer terminal 10. In an embodiment, the transmission means 106 comprises a network interface controller (NIC), which can connect to other networks via a base station and thereby communicate with the Internet. In an example, the transmission means 106 may be a radio frequency (RF) module, which is for communicating with the Internet wirelessly.

The display device can, for example, be a touch-screen liquid crystal display (LCD). This liquid crystal display can enable the user to interact with the user interface of the computer terminal 10 (or mobile device).

Please understand that, in some embodiments, the computer device (or mobile device) shown in FIG. 1 described above has a touch display device (also called a "touchscreen" or a "touch display screen"). In some embodiments, the computer device (or mobile device) shown in FIG. 1 described above has a graphical user interface (GUI). The user may engage in human-machine interactions with the GUI by finger contact and/or gestures touching the touch-sensitive surface. The human-machine interaction functions here optionally include the following interactions: communication interfacing, receiving emails, call interfacing, creating a web page, drawing, text processing, producing an electronic document, gaming, videoconferencing, playing digital video, playing digital audio, and/or Internet browsing. The executable instructions for executing the human-machine interaction functions described above are configured/stored in computer program products executable by one or more processors or in readable storage media.

An embodiment provided by embodiments of the present application may be broadly applied on the Internet. The aforementioned computer terminal 10 provided in the present application may be used to provide a human-machine interface. FIG. 2 is a human-machine interface for implementing a path determining method according to an embodiment of the present application. As shown in FIG. 2, said human-machine interface comprises: a first control 20, a second control 22, and a third control 24, wherein:
The first control 20 is for presenting a communication record interface. The second control 22, disposed on said first control, is for presenting the number of all unread messages of a designated object in said communication record interface. The third control 24 is for presenting second message content obtained after summarizing first message content of said all unread messages.

As an embodiment, said human-machine interface may be, but is not limited to, a communication interface. For example, it may be a communication record interface, wherein each of said controls packages methods and data. In computer programming, a control may be a graphic user interface element, and the user may modify how the displayed information is displayed. For example, there are view boxes, text boxes, icons, buttons, and other basic visible building blocks. They are contained in application programs and control all data processed by the program, as well as interactive operations concerning this data.

Please understand that said first control 20 may be a text box, a composite box (a text box with a menu or a pull-down menu), a display box, a window, or other type of control. It may be used to present a communication record interface on the interface described above. Said second control 22 may be a tag, icon, information bar, status bar, or other type of control disposed on the first control. It may be used to present the number of all unread messages of a designated object on said communication record interface, wherein said designated object includes, but is not limited to, a group chat object or an individual chat object. Said third control 24 may be a text box, a composite box (a text box with a menu or a pull-down menu), a display box, a window, or other type of control. It may be used to present second message content obtained after first message content of said all unread messages has been summarized.

In an embodiment, said third control 24 may further include at least one of the following: a reply control for said all unread messages, a control for adjusting the unread status of said all unread messages, and a control for evaluating said all unread messages.

As communication technology develops, an ever-growing number of people choose to use instant communication tools to communicate with others. Moreover, inspired by the fact that communication using instant communication tools has become an integral part of people's habits and thinking, business users have enriched office applications to make communication experiences consistent with instant communication tools. They tend to select instant communication tools such as WeChat Work that have the advantages of a familiar communication experience and simplicity and ease of use. It enables employees in an enterprise to use an enterprise-dedicated communication tool easily in a relaxed manner.

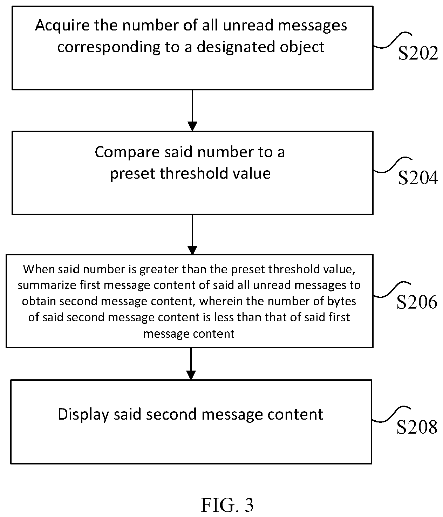

In the runtime environment described above, the present application provides an unread message display method as shown in FIG. 3. FIG. 3 is a flowchart of an unread message display method according to an embodiment of the present application.

Please note that the executing entity for the unread message display method in the present application may be the computer terminal 10 in FIG. 1, or it may be applied on, but is not limited to, various types of instant communication tools, such as QQ, WeChat, Wangwang, and other instant communication software. As shown in FIG. 3, said unread message display method is implemented through the steps below:
Step S202: Acquire the number of all unread messages corresponding to a designated object.

In step S202, said designated object may include, but is not limited to, a group chat object or an individual chat object.

In an embodiment, a server acquires the number of all unread messages corresponding to said designated object after receiving a count request sent by a user through a user terminal. That is, the user may click, tap, or touch a count icon for all unread messages in a human-machine interface provided by the user terminal, and said user terminal then sends said count request to the server. Said user terminal may be a smart phone (e.g., an Android phone or an iOS phone), a tablet computer (e.g., an iPad), a computer, or other terminal device.

Step S204: Compare said number to a preset threshold value.

Step S206: When said number is greater than the preset threshold value, summarize first message content of said all unread messages to obtain second message content, wherein the number of bytes of said second message content is less than that of said first message content.

Step S208: Display said second message content.

In step S204 above, said preset threshold value may be a reasonable threshold initially generated by the instant messaging tool. For example, to raise processing efficiency of the user's unread messages, it may be initially set to "7." However, the user may personalize said preset threshold value setting as needed. For example, the user may define it under "Settings" in the instant communication tool, changing it to "3," "5," "10," etc. For example, some users have rather many friends and chat groups and, with the preset threshold value at "7," they still cannot achieve the goal of efficient processing of unread messages. Therefore, they can modify said preset threshold value to a larger value, such as "10" or "15." In addition, if users have fewer friends and chat groups and are unlikely to have many unread messages, and if said preset threshold value is "7," the users may select to change said preset threshold value to a smaller value, such as "3" or "5." Please note that the above analysis is merely illustrative and is not limited thereto. It should not be understood as specifically limiting the present application.

In step S206, said first message content is all of said unread messages. Said second message content may be summarized messages obtained by summarizing said first message content with NLP technology. Moreover, the number of bytes of said second message content is less than that of said first message content.

In an embodiment, when according to comparison the number of said all unread messages is greater than said preset threshold value, that indicates that the current number of all unread messages is relatively large or that many users in the group chat object are actively participating in posting messages. It is then possible to use NLP technology to summarize the first message content of said all unread messages to obtain summarized second message content. In addition, when the number of said all unread messages is less than or equal to the preset threshold value, then priority may be given to choosing to present the original content of all unread messages to the user without summarization.

In addition, if, in the process of rapidly viewing group chat messages, comparison indicates that the number of all unread messages of the number of group chat messages [sic] is greater than said preset threshold value, the top three message-posters are selected from the current information. It is then possible to help users assess the value of group chat messages to themselves and to reduce the time spent by users viewing and replying to unread messages.

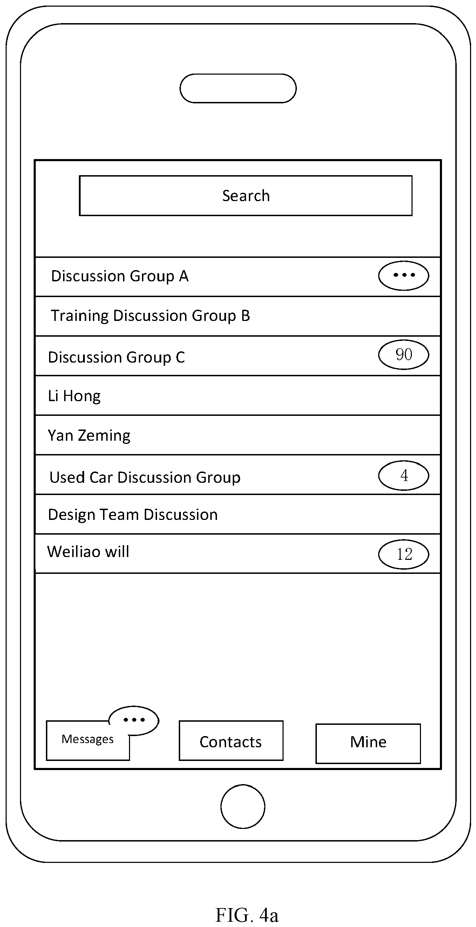

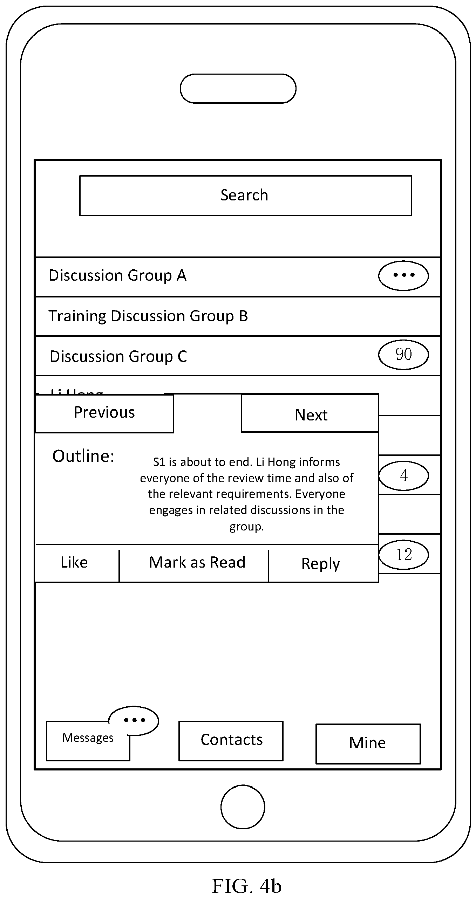

The following uses a business version of instant messaging software as an example. An optional implementation of the present application is explained with the example:
After the user registers and logs into said instant messaging software, the communication record interface, as shown in FIG. 4a, displays "Discussion Group A," "Training Discussion Group B," "Design Team Discussion Group," and other chat objects, as well as individual chat objects such as "Li Hong," "Yan Zeming," and "Weiliao will." In an embodiment of the present application, the user may tap a count icon on the communication record interface (the oval icons on the right side in FIG. 4a) to trigger a count instruction. After the user terminal receives a count instruction triggered by the user, it sends a count request to the server. The server then acquires the number of all unread messages of said group chat object or individual chat object. As shown in FIG. 4a, if the current user needs to obtain the number of all unread messages in the individual chat object "Weiliao will," the user may tap the oval icon to the right of the "Weiliao will" dialog box in FIG. 4a and then may acquire "12" as the number of all unread messages corresponding to the "Weiliao will" dialog box, as shown in FIG. 4b. A designated display area where messages may be quickly viewed is also generated. Moreover, if the number of all unread messages that is acquired is greater than a preset threshold value, NLP technology may be used to summarize first message content of all unread messages to obtain summarized second message content, and said summarized second message content is displayed in the "Outline" area of the designated display area shown in FIG. 4b.

From the scheme defined by the above embodiment the following becomes apparent: the number of all unread messages corresponding to a designated object is acquired, and said number is compared to a preset threshold value; when said number is greater than the preset threshold value, first message content of said all unread messages is summarized to obtain second message content, wherein the number of bytes of said second message content is less than that of said first message content; then said second message content is displayed.

Through the scheme provided by the above embodiment of the present application, it is possible to achieve the objectives of making it convenient for the user to efficiently process unread messages in the process of using an instant messaging tool and thus to achieve the technical result of improved user experience. The technical problem of inefficient processing of unread messages by the user while using the instant messaging tool is thus solved.

In an embodiment, displaying said second message content comprises: displaying said second message content in a designated display area of the communication record interface where said designated object is located, wherein said designated display area is a display area overlapping said communication record interface.

In an embodiment, it is possible to display said second message content in a designated display area of the communication record interface. As shown in FIGS. 4b through 4d described above, said designated display area is a display area overlapping said communication record interface. It is then possible to implement the technical result of prominently displaying said second message content to facilitate prompt and efficient user viewing of messages of said second type. This achieves the objective of facilitating efficient processing of unread messages by a user in the process of using an instant messaging tool and thus achieves the technical result of improving the user's use experience.

In an embodiment, prior to displaying said second message content in a designated display area of the communication record interface where said designated object is located, said method further comprises: receiving a user trigger instruction for the count icon of said all unread messages, wherein the trigger instruction is for triggering display of said designated display area.

As shown again in FIG. 4a, if the current user needs to obtain the number of all unread messages in the individual chat object "Weiliao will," the user may tap the oval icon to the right of the "Weiliao will" dialog box in FIG. 4a and then may acquire "12" as the number of all unread messages corresponding to the "Weiliao will" dialog box, as shown in FIG. 4b. A designated display area where messages may be quickly viewed, such as a dialog box overlapping said communication record interface, is also generated.

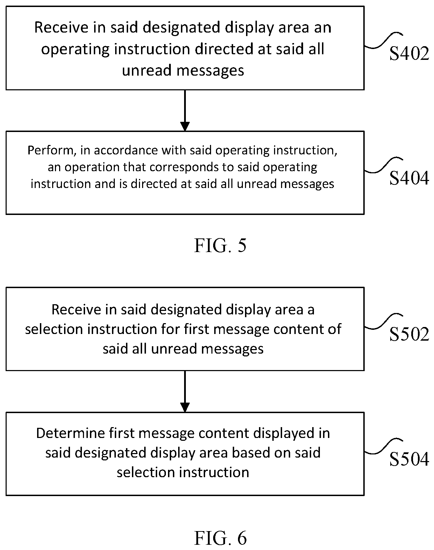

In an embodiment, FIG. 5 is a flowchart of an optional unread message display method according to an embodiment of the present application. As shown in FIG. 5, after displaying said second message content, it further comprises:
Step S402: Receive in said designated display area an operating instruction directed at said all unread messages.
Step S404: Perform, in accordance with said operating instruction, an operation that corresponds to said operating instruction and is directed at said all unread messages.

In the optional embodiment provided by steps S302 through S304 above, after said second message content is displayed in the designated display area overlapping said communication record interface, said designated display area may also receive a user operating instruction, such as "Reply," "Mark as Read," "Like," or other operating instruction. In an optional embodiment, the user may trigger said operating instruction by clicking, tapping, or touching.

In an embodiment, performing, in accordance with said operating instruction, an operation that corresponds to said operating instruction and directed at said all unread messages includes at least one of the following:
Replying to said all unread messages. Optionally, this process may take the form of replying in said designated display area or as follows: after receiving said operating instruction, going to the dialog page where said all unread messages are located and replying in the dialog box on the dialog page.

Adjusting the unread status or read status of said all unread messages. For example, unread status is changed to read status, and after it is changed to read status, said designated display area is closed.

Evaluating said all unread messages. For example, a "Like" or other such operation is performed on all unread messages.

Please note that in said embodiment the "Mark as Read" icon shown in FIGS. 4b through 4d may be tapped, touched, or swiped to adjust the unread status or read status of unread messages, and the "Like" icon shown in FIGS. 4b through 4d may be clicked, touched, or swiped to "like" said all unread messages.

It is clear from the embodiments described above that, as shown in FIGS. 4b through 4d, the user need only tap, touch, or swipe the count icon to quickly view unread message content. Moreover, without opening the message dialog box, the user may perform operations such as "Like," "Mark as Read," or "Reply," thus shortening the operating paths whereby the user views unread messages, replies to messages, and "likes" them and making it convenient for the user to efficiently process unread messages in the process of using the instant messaging tool.

In an optional embodiment, said designated object comprises: a group object. When displaying said second message content in a designated display area of the communication record interface where said designated object is located, said method further comprises:
The number of posted messages of a designated message-posting object in said group object is displayed in said designated display area. Said designated message-posting object includes the message-posting object with the highest priority level in said group object or the N message-posting objects with the most posted messages in said group object, wherein N is a natural number no less than 1.

In an optional embodiment, said message-posting obj ect with the highest priority level may be the group administrator, an executive, or a team leader in the group chat object, but is not limited to these. In the present application, the priority levels of message-posting objects may be set. For example, if the current group object is a business group chat, the priority level of the group administrator may be set to the highest level, followed by the enterprise's general manager, assistant managers, and other senior executives and then by ordinary users.

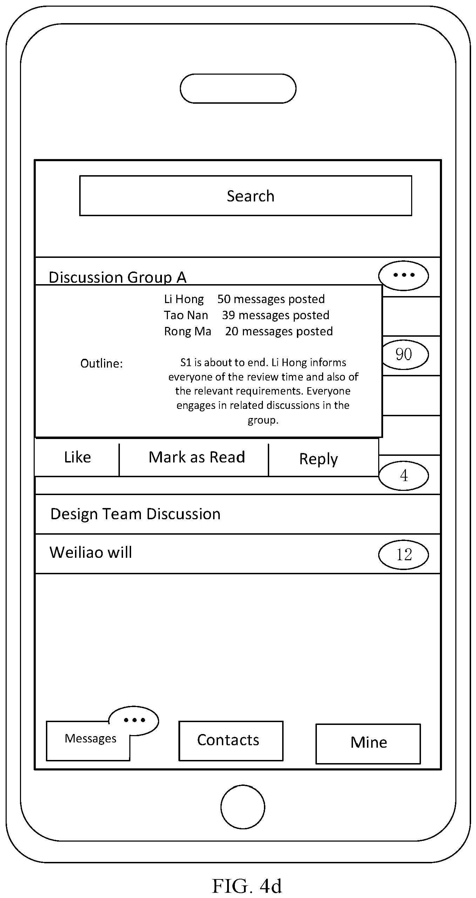

FIG. 4d shows a communication record interface (message list interface) of a group chat object where the number of all unread messages is greater than a preset threshold value. As shown in FIG. 4d, the embodiment of the present application may conduct counts for the three message-posting objects with the most messages posted in the group chat object and rank the three top message-posting objects according to number of messages posted. It can then shorten the paths whereby the user acquires unread message content in each dialog when there are multiple unread message dialogs. At the same time, it shortens the paths whereby the user views unread messages, replies to messages, and "likes" them so that the user can efficiently process unread messages in the process of using an instant messaging tool.

In an optional embodiment, said method further comprises: displaying said first message content in said designated display area when said number is less than a preset threshold value.

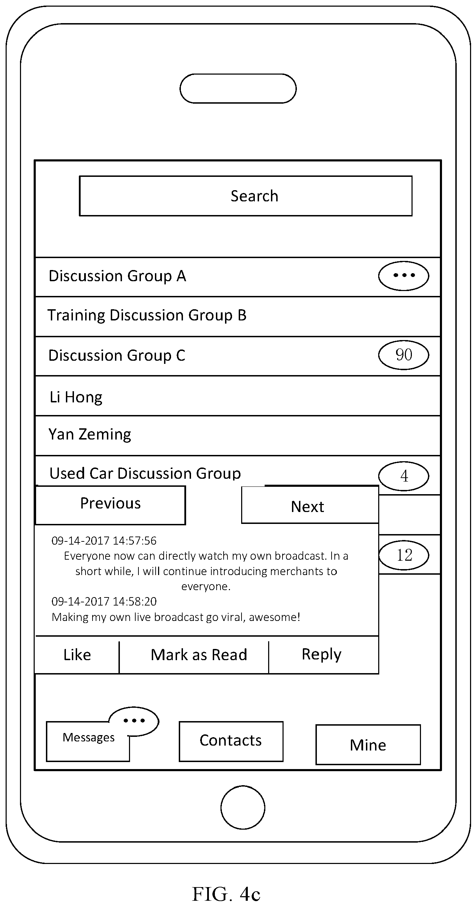

As an optional embodiment, FIG. 4c shows a communication record interface when the number of all unread messages is less than or equal to a preset threshold value. As shown in FIG. 4c, all of the unread messages may be presented to the user without having to summarize them.

In an optional embodiment, FIG. 6 is a flowchart of an optional unread message display method according to an embodiment of the present application. As shown in FIG. 6, when said first message content is displayed in said designated display area, said method further comprises:
Step S502: Receive in said designated display area a selection instruction for first message content of said all unread messages.
Step S504: Determine first message content displayed in said designated display area based on said selection instruction.

As shown in FIGS. 4b through 4d, in an embodiment of the present application, the user may also tap or touch the "Previous" or "Next" icon on the communication record interface to switch the first message content of multiple unread messages up or down. For example, the user may tap the "Previous" icon shown in FIG. 4b on the communication record interface to view the previous unread message or tap the "Next" icon shown in FIG. 4b on the communication record interface to view the next unread message.

On the basis of the optional embodiment provided by steps S502 through S504 above, the user may, in the designated display area, tap or touch the "Previous" or "Next" icon on the communication record interface to switch the first message content of multiple unread messages up or down so that the user efficiently processes unread messages in the process of using the instant messaging tool and thus achieves the technical result of improving the user's use experience.

In an optional embodiment, after displaying said second message content in a designated display area of the communication record interface where said designated object is located, said method further comprises: receiving a tap or click instruction by the user in another area of said communication record interface.

In an embodiment, said other area is an area other than said designated display area in said communication record interface. Said designated display area is closed when triggered by said tap or click instruction.

On the basis of the optional embodiment above, said user terminal may receive a tap or click instruction from the user in another area on said communication record interface and, triggered by said tap or click instruction, clear the designated display area on said communication record interface.

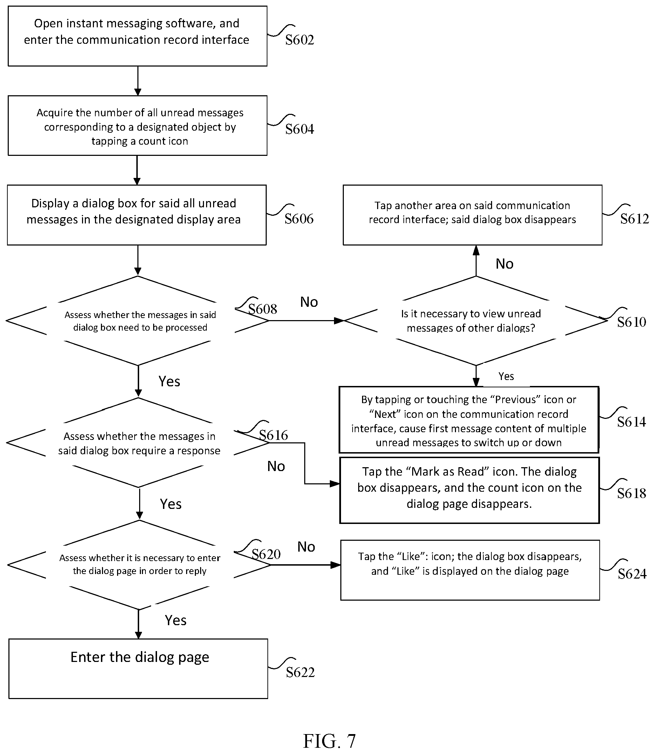

FIG. 7 is a flowchart of an unread message display method according to an embodiment of the present application. As shown in FIG. 7, the following uses a particular optional implementation as an example. An implementation in the present application is explained with the example:
Step S602: Open instant messaging software, and enter the communication record interface.

In step S602 described above, said instant messaging software may be, but is not limited to, an instant communication tool on a user terminal, such as QQ, WeChat, or Wangwang. Said communication record interface may be a message list interface in said instant messaging software and may be presented in the form of the interface displayed in FIGS. 4a through 4d, but is not limited thereto.

Said user terminal may be a smart phone (e.g., an Android phone or an iOS phone), a tablet computer (e.g., an iPad), a computer, or other terminal device.

Step S604: Acquire the number of all unread messages corresponding to a designated object by tapping a count icon.

In step S604, said designated object may include, but is not limited to, a group chat object or an individual chat object.

In an embodiment of the present application, the user may tap a count icon on the communication record interface to trigger a count instruction. After the user terminal receives a count instruction triggered by the user, it sends a count request to the server. The server then acquires the number of all unread messages of said group chat object or individual chat object.

In an optional embodiment, a server may acquire the number of all unread messages corresponding to said designated object after receiving a count request sent by a user through a user terminal. That is, the user may click, tap, or touch a count icon for all unread messages in a human-machine interface provided by the user terminal, and said user terminal then sends said count request to the server.

Step S606: Display a dialog box for said all unread messages in the designated display area.

After step S604 described above, the preset threshold value may be compared to said number, and, when said number is greater than the preset threshold value, first message content of said all unread messages is summarized to obtain second message content. Moreover, said second message content is displayed in a designated display area of the communication record interface. As shown in FIGS. 4b through 4d, said designated display area is a display area overlapping said communication record interface, and, specifically, in an optional embodiment provided by step S606, it may be a viewing dialog box for displaying said all unread messages. It is then possible to achieve the technical result of prominently displaying said second message content so that the user can promptly and efficiently view messages of said second type.

Please note that said first message content is all of said unread messages. Said second message content may be summarized messages obtained by summarizing said first message content with NLP technology. Moreover, the number of bytes of said second message content is less than that of said first message content.

Step S608: Assess whether the messages in said dialog box need to be processed.

Step S616 is executed if the assessment result in step S608 is that the messages in said dialog box need to be processed. Step S610 is executed if the assessment result is that the messages in said dialog box do not need to be processed.

Step S610: Is it necessary to view unread messages of other dialogs?

In step S610 described above, an assessment is made as to whether unread messages of other dialogs need to be viewed. Step S614 is executed if the assessment result is that unread messages of other dialogs need to be viewed. Step S612 is executed if the assessment result is that unread messages of other dialogs do not need to be viewed.

Step S612: Tap another area on said communication record interface; said dialog box disappears.

In step S612, said user terminal may receive a tap or click instruction from the user in another area of said communication record interface and, triggered by said tap or click instruction, clear the designated display area from said communication record interface, i.e., said dialog box disappears.

Step S614: By tapping or touching the "Previous" icon or "Next" icon on the communication record interface, cause first message content of multiple unread messages to switch up or down.

As shown in FIGS. 4b through 4d, in an embodiment of the present application, the user may, in step S614, also tap or touch the "Previous" or "Next" icon on the communication record interface to switch the first message content of multiple unread messages up or down. For example, the user may tap the "Previous" icon shown in FIG. 4b on the communication record interface to view the previous unread message or tap the "Next" icon shown in FIG. 4b on the communication record interface to view the next unread message.

Step S616: Assess whether the messages in said dialog box require a response.

In an embodiment, after said second message content is displayed in the designated display area overlapping said communication record interface, said designated display area may also receive a user operating instruction, such as "Reply," "Mark as Read," "Like," or other operating instruction. In an optional embodiment, the user may trigger said operating instruction through tapping or touching and then assess whether the messages in said dialog box require processing.

In an embodiment, said processing may take at least one of the following forms: replying to said all unread messages, adjusting the unread status or read status of said all unread messages, and evaluating said all unread messages.

Step S620 below is executed if the assessment result in step S616 above is yes. Step S618 below is executed if the assessment result in step S616 above is no.

Step S618: Tap the "Mark as Read" icon. The dialog box disappears, and the count icon on the dialog page disappears.

In step S618, it is possible to adjust the unread status or read status of said all unread messages by tapping or touching the "Mark as Red" icon shown in FIGS. 4b through 4d. Moreover, after the "Mark as Read" icon is tapped, the dialog box disappears, and the count icon on the dialog page disappears.

Step S620: Assess whether it is necessary to enter the dialog page in order to reply.

Step S622: Enter the dialog page.

In step S620, step S622 (i.e., enter the dialog page) is executed if the assessment result is that there is a need to enter the dialog page in order to reply. If the assessment result is that there is no need to enter the dialog page in order to reply, that means that replying is not the way in which the user responds, but rather evaluating by "liking": step S624 is executed.

Step S624: Tap the "Like" icon; the dialog box disappears, and "Like" is displayed on the dialog page.

In step S624, it is possible to "like" said all unread messages by tapping or touching the "Like" icon shown in FIGS. 4b through 4d. Moreover, after tapping "Like," the dialog box disappears, and the dialog page displays "Like."

It is clear from the embodiments described above that, as shown in FIGS. 4b through 4d, the user need only tap or touch the count icon to quickly view unread message content. Moreover, without opening the message dialog box, the user may perform operations such as "Like," "Mark as Read," or "Reply," thus shortening the operating paths whereby the user views unread messages, replies to messages, and "likes" them and making it convenient for the user to efficiently process unread messages in the process of using the instant messaging tool.

Please note that all the method embodiments described above have been presented as a series of a combination of actions in order to simplify description. However, persons skilled in the art should know that the present application is not limited by the action sequences that are described, for some of the steps may make use of another sequence or be implemented simultaneously in accordance with the present application. Furthermore, persons skilled in the art should also know that the embodiments described in the specification are preferred embodiments and that the actions and modules involved therein are not necessarily required by the present application.

Through descriptions of the above implementations, persons skilled in the art can clearly understand that methods based on the above embodiment may be realized through software with the necessary general-use hardware platform. Of course, hardware may also be used, but in many cases the former is the preferred implementation. Based on such an understanding, the technical solution of the present application, whether intrinsically or with respect to portions that contribute to the prior art, is realizable in the form of software products. These computer software products can be stored on storage media (such as ROM/RAM, magnetic disks, and optical disks) and include a certain number of instructions used to cause a piece of terminal equipment (which could be a mobile telephone, a computer, a server, or network equipment) to execute the methods described in the embodiments of the present application.

### Embodiment 2

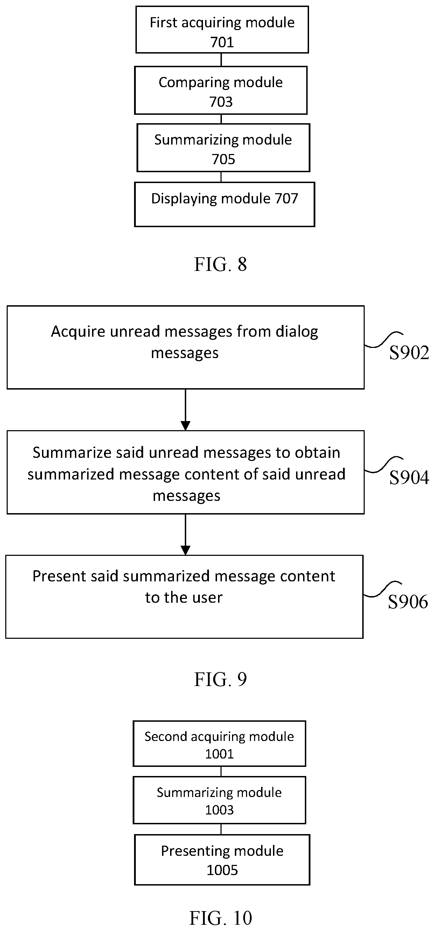

An embodiment of the present application further provides a means for implementing said unread message display method. FIG. 8 is a structural block diagram of an unread message display means according to an embodiment of the present application. As shown in FIG. 8, the unread message display means comprises: a first acquiring module 701, a comparing module 703, a summarizing module 705, and a displaying module 707, wherein:
the acquiring module 701 is for acquiring the number of all unread messages corresponding to a designated object; the comparing module 703 is for comparing said number to a preset threshold value; the summarizing module 705 is for summarizing first message content of said all unread messages when said number is greater than the preset threshold value so as to obtain second message content, wherein the number of bytes of said second message content is less than that of said first message content; the displaying module 707 is for displaying said second message content.

Please note that said first acquiring module 701, comparing module 703, summarizing module 705, and displaying module 707 correspond to steps S202 through S208 in embodiment 1. The same examples and application contexts are implemented by each of the above modules and by the corresponding steps, but they are not limited to the content disclosed by embodiment 1 above. Please note that, as part of the means, said modules may run in the computer terminal 10 provided by embodiment 1.

In additional, please also note that, regarding optional or preferred implementations of the present embodiment, one may refer to the relevant description in embodiment 1. They will not be described further here.

### Embodiment 3

An embodiment of the present application provides a message processing method as shown in FIG. 9. FIG. 9 is a flowchart of a message processing method according to an embodiment of the present application. Please note that the executing entity for a message processing method provided by the present application may be the computer terminal 10 in FIG. 1. The method may be applied on, but is not limited to, various types of instant communication tools, such as QQ, WeChat, Wangwang, and other instant communication software. As shown in FIG. 9, the method processing method provided by the present application may be implemented through the steps below:
Step S902: Acquire unread messages from dialog messages.

In step S902, said dialog messages may include, but are not limited to, dialog messages of a group chat object or an individual chat object. Said unread messages are dialog messages unread by the user.

In an embodiment, a server may (but is not limited to) acquire unread messages from dialog messages after receiving a count request sent by a user through a user terminal. That is, the user may click, tap, or touch a count icon for all unread messages in a human-machine interface provided by the user terminal, and said user terminal then sends said count request to the server. Said user terminal may be a smart phone (e.g., an Android phone or an iOS phone), a tablet computer (e.g., an iPad), a computer, or other terminal device.

In addition, a server may also automatically acquire unread messages from dialog messages. For example, it automatically acquires unread messages from dialog messages at multiple preset time points or after one or more set intervals of time.

Step S904: Summarize said unread messages to obtain summarized message content of said unread messages.

In an optional embodiment, when according to comparison the number of said unread messages is greater than a preset threshold value, that indicates that the current number of all unread messages is relatively large or that many users in the group chat object are actively participating in posting messages. It is then possible to use NLP technology to summarize said unread messages to obtain summarized message content. In addition, when the number of said unread messages is less than or equal to said preset threshold value, then priority may be given to choosing to present the original content of all unread messages to the user without summarization.

Please note that said summarized message content may be summarized messages obtained by summarizing said unread message content with NLP technology. Moreover, the number of bytes of said summarized message content is less than that of said unread message content.

In addition, if, in the process of rapidly viewing group chat messages, comparison indicates that the number of unread messages of the number of group chat messages [sic] is greater than said preset threshold value, the top three message-posters are selected from the current information. It is then possible to help users assess the value of group chat messages to themselves and to reduce the time spent by users viewing and replying to unread messages.

Step S906: Present said summarized message content to the user.

In an optional embodiment, when said summarized message content of said unread messages is obtained, it is also possible to generate a designated display area whereby the user can quickly view said summarized message content on a user terminal and to present the user with said summarized message content on said designated display area.

From the scheme defined by the above embodiment the following becomes apparent: acquiring unread messages from dialog messages; summarizing said unread messages to obtain summarized message content of said unread messages; presenting said summarized message content to a user.

Through the scheme provided by the above embodiment of the present application, it is possible to achieve the objectives of making it convenient for the user to efficiently process unread messages in the process of using an instant messaging tool and thus to achieve the technical result of improved user experience. The technical problem of inefficient processing of unread messages by the user while using the instant messaging tool is thus solved.

In an embodiment, presenting said summarized message content comprises: displaying said summarized message content in a designated display area of the communication record interface where a designated object is located, wherein said designated display area is a display area overlapping said communication record interface.

In an embodiment, said summarized message content may be displayed in a designated display area of a communication record interface. Said summarized message content may then be presented to the user. Said designated display area is a display area overlapping said communication record interface. It is then possible to implement the technical result of prominently displaying the summarized message content to facilitate prompt and efficient user viewing of said summarized message content. This achieves the objective of facilitating efficient processing of unread messages by a user in the process of using an instant messaging tool and thus achieves the technical result of improving the user's use experience.

In an embodiment, after presenting said summarized message content, further comprises the steps below:
Step S1002: Receive in said designated display area an operating instruction directed at said unread messages.
Step S1004: Perform, in accordance with said operating instruction, an operation that corresponds to said operating instruction and is directed at said unread messages.

In the embodiment above, after said second message content is displayed in the designated display area overlapping said communication record interface, said designated display area may also receive a user operating instruction, such as "Reply," "Mark as Read," "Like," or other operating instruction. In an optional embodiment, the user may trigger said operating instruction by clicking, tapping, or touching.

In an embodiment, performing, in accordance with said operating instruction, an operation that corresponds to said operating instruction and directed at said unread messages includes at least one of the following:
Replying to all unread messages. Optionally, this process may take the form of replying in said designated display area or as follows: after receiving said operating instruction, going to the dialog page where said all unread messages are located and replying in the dialog box on the dialog page.

Adjusting the unread status or read status of all unread messages. For example, unread status is changed to read status, and after it is changed to read status, said designated display area is closed.

Evaluating all unread messages. For example, a "Like" or other such operation is performed on all unread messages.

In an optional embodiment, after said summarized message content is presented to the user, said method further comprises the steps below:
Step S1102: Determine the designated message-posting object in a group associated with the dialog messages, wherein said designated message-posting object comprises the message-posting object with the highest priority level in said group object or the N message-posting objects with the most posted messages in said group object, wherein N is a natural number no less than 1.
Step S1104: Count the number of messages posted in said group by said designated message-posting object.
Step S1106: Present the number of messages posted by said designated message-posting object.

In an embodiment, said message-posting object with the highest priority level may be the group administrator, an executive, or a team leader in the group chat object, but is not limited to these. In the present application, the priority levels of message-posting objects may be set. For example, if the current group object is a business group chat, the priority level of the group administrator may be set to the highest level, followed by the enterprise's general manager, assistant managers, and other senior executives and then by ordinary users.

The embodiment of the present application may also (but is not limited to) conduct counts for the three message-posting objects with the most messages posted in the group chat object and rank the three top message-posting objects in rank positions in the dialog box according to number of messages posted. It can thus shorten the paths whereby the user acquires unread message content in each dialog when there are multiple unread message dialogs. At the same time, it shortens the paths whereby the user views unread messages, replies to messages and "likes" them so that the user can efficiently process unread messages in the process of using an instant messaging tool.

In addition, in an example not forming part of the present application, the example may (but is not limited to) present the number of messages posted by said designated message-posting object in an icon or a corner mark to the user.

In the optional example, before said unread messages are summarized, said method further comprises:
Step S1202: Acquire the number of unread messages in the group associated with said dialog messages.
Step S 1204: Compare said number to a preset threshold value.
Step S1206: Determine whether to trigger summarization of said unread messages based on the comparison result, wherein summarization of said unread messages is triggered when said comparison result indicates that said number is greater than said preset threshold value.

In the example, it is possible, before summarization of said unread messages, to acquire the number of unread messages of a group associated with said dialog messages, to compare said number with a preset threshold value, and to summarize said unread messages when the comparison result indicates that the number is greater than the preset threshold value and thus obtain summarized message content. Said summarized message content can then be displayed in a designated display area of the communication record interface, wherein said designated display area is a display area overlapping said communication record interface.

It is then possible with the above embodiment to achieve the technical result of prominently displaying the summarized message content so that the user can promptly and efficiently view said summarized message content.

### Embodiment 4

An embodiment of the present application further provides a means for implementing said message processing method. FIG. 10 is a structural block diagram of a message processing means according to an embodiment of the present application. As shown in FIG. 10, the message processing means comprises: a second acquiring module 1001, a summarizing module 1003, and a presenting module 1005, wherein:
the second acquiring module 1001 is for acquiring unread messages from dialog messages; the summarizing module 1003 is for summarizing said unread messages to obtain summarized message content of said unread messages; the presenting module 1005 is for presenting said summarized message content to a user.

Please note that said second acquiring module 1001, summarizing module 1003, and presenting module 1005 correspond to steps S902 through S906 in embodiment 3. The same examples and application contexts are implemented by each of the above modules and by the corresponding steps, but they are not limited to the content disclosed by embodiment 3 above. Please note that, as part of the means, said modules may run in the computer terminal 10 provided by embodiment 1.

In additional, please also note that, regarding optional or preferred implementations of the present embodiment, one may refer to the relevant descriptions in embodiments 1 and 3. They will not be described further here.

### Embodiment 5

An embodiment of the present application may provide a terminal. The terminal may be any computer terminal device in a group of terminals. Optionally, in the present embodiment, said computer terminal may also be replaced by a terminal device such as a mobile terminal.

Optionally, in the present embodiment, said terminal may be located on at least one network device among multiple network devices of a computer network.

Optionally, in the present embodiment, said computer terminal may be located on at least one network device among multiple network devices of a computer network.

In the present embodiment, said terminal comprises: a processor for acquiring the number of all unread messages corresponding to a designated obj ect, comparing said number to a preset threshold value, and summarizing first message content of said all unread messages when said number is greater than the preset threshold value to obtain second message content, wherein the number of bytes of said second message content is less than that of said first message content; a display means for displaying said second message content.

Optionally, the terminal may be any computer terminal device in a group of terminals. As shown in FIG. 1, the computer terminal may comprise: one or more processors, memory, and a transmission means.

The memory may be used to store software programs and modules, e.g., program instructions/modules corresponding to the secure unread message display method and means in an embodiment of the present application. By running software programs and modules stored in the memory, the processor executes various function apps and data processing, i.e., it implements said unread message display method. The memory may comprise high-speed random access memory. It may further comprise non-volatile memory, such as one or more magnetic storage devices, flash memory or other non-volatile solid-state memory. In some embodiments, the memory may further comprise memory that is remotely disposed relative to the processor. Such remote memory may be connected to the terminal A via a network. Examples of the network described above include, but are not limited to, the Internet, corporate intranets, local area networks, mobile communication networks, and combinations thereof.

In the present embodiment, said computer terminal can execute program code for the following steps in an unread message display method of an application: acquiring the number of all unread messages corresponding to a designated obj ect, comparing said number to a preset threshold value; summarizing first message content of said all unread messages when said number is greater than the preset threshold value to obtain second message content, wherein the number of bytes of said second message content is less than that of said first message content; and displaying said second message content.

The processor may, via a transmission means, call information and applications stored in the memory to execute the steps below: acquiring the number of all unread messages corresponding to a designated object, comparing said number to a preset threshold value; summarizing first message content of said all unread messages when said number is greater than the preset threshold value to obtain second message content, wherein the number of bytes of said second message content is less than that of said first message content; and displaying said second message content.

Said processor further executes program code for the steps below: displaying said second message content in a designated display area of the communication record interface where said designated object is located, wherein said designated display area is a display area overlapping said communication record interface.

Said processor further executes program code for the steps below: receiving in said designated display area an operating instruction directed at said all unread messages, and performing, in accordance with said operating instruction, an operation that corresponds to said operating instruction and is directed at said all unread messages.

Said processor further executes program code for the steps below: replying to said all unread messages, adjusting the unread status or read status of said all unread messages, and evaluating said all unread messages.

Said processor further executes program code for the steps below: receiving a user trigger instruction for the count icon of said all unread messages, wherein the trigger instruction is for triggering display of said designated display area.

Said processor further executes program code for the steps below: displaying the number of posted messages of a designated message-posting object in said group object in said designated display area, wherein said designated message-posting object comprises the message-posting object with the highest priority level in said group object or the N message-posting objects with the most posted messages in said group object, wherein N is a natural number no less than 1.

Said processor further executes program code for the steps below: displaying said first message content in said designated display area when said number is less than a preset threshold value.

Said processor further executes program code for the steps below: receiving in said designated display area a selection instruction for first message content of said all unread messages; determining, in accordance with said selection instruction, the first message content displayed in said designated display area.

Said processor further executes program code for the steps below: receiving a tap or click instruction from the user for another area in said communication record interface, wherein said other area is an area other than said designated display area on said communication record interface; closing said designated display area when triggered by said tap or click instruction.

A scheme for displaying unread messages is provided by an embodiment of the present application. The number of all unread messages corresponding to a designated object is acquired, and said number is compared to a preset threshold value; when said number is greater than the preset threshold value, first message content of said all unread messages is summarized to obtain second message content, wherein the number of bytes of said second message content is less than that of said first message content; and said second message content is displayed. The objective of facilitating efficient processing of unread messages by a user in the process of using an instant messaging tool is thereby achieved, and the technical problem of inefficient processing of unread messages by a user in the process of using an instant messaging tool is thus solved.

In the present embodiment, said computer terminal further executes program code for the following steps in an unread message display method of an application: acquiring unread messages from dialog messages; summarizing said unread messages to obtain summarized message content of said unread messages; presenting said summarized message content to a user.

Said processor further executes program code for the steps below: displaying said summarized message content in a designated display area of the communication record interface where a designated object is located, wherein said designated display area is a display area overlapping said communication record interface.

Said processor further executes program code for the steps below: receiving in said designated display area an operating instruction directed at said unread messages, and performing, in accordance with said operating instruction, an operation that corresponds to said operating instruction and is directed at said unread messages.

Said processor further executes program code for the steps below: determining the designated message-posting object in a group associated with dialog messages, wherein said designated message-posting object comprises the message-posting object with the highest priority level in said group object or the N message-posting objects with the most posted messages in said group object, wherein N is a natural number no less than 1; counting the number of messages posted in said group by said designated message-posting object; presenting the number of messages posted by said designated message-posting object.

Said processor further executes program code for the steps below: acquiring the number of unread messages of a group associated with said dialog messages; comparing said number to a preset threshold value; determining whether to trigger summarization of said unread messages based on the comparison result, wherein summarization of said unread messages is triggered when said comparison result indicates that said number is greater than said preset threshold value.

Another scheme for displaying unread messages is provided by an embodiment of the present application. Unread messages are acquired from the dialog messages, and said unread messages are summarized to obtain summarized message content of said unread messages. Said summarized message content is presented to a user. It is thereby possible to achieve the objectives of making it convenient for the user to efficiently process unread messages in the process of using an instant messaging tool. The technical problem of inefficient processing of unread messages by the user while using the instant messaging tool is thus solved.

Persons skilled in the art can understand that the structure shown in FIG. 1 is merely illustrative. The computer terminal could also be a smart phone (such as an Android phone or an iOS phone), a tablet computer, a palmtop computer, a mobile Internet device (MID), a PAD, or another terminal device. FIG. 1 does not impose restrictions on the structures of the electronic devices described above. For example, the computer terminal 10 may further comprise more or fewer components (such as network interfaces and display devices) than are shown in FIG. 1 or have a configuration different from the one shown in FIG. 1.

Persons with ordinary skill in the art can understand that all or some of the steps in the various methods of the embodiments described above may be completed by using programs to instruct computer terminal-related hardware. The programs may be stored in computer-readable storage media, and the storage media may comprise flash drives, read-only memory (ROM), random access memory (RAM), magnetic disks, or optical disks.

### Example 6

An example of technology pertaining to the present application provides a storage medium. Optionally, in the present example, said storage medium may be used to save the program code executed by the unread message display method provided by embodiment 1 above.

Optionally, in the present example, said storage medium may be located on any computer within a computer terminal group in a computer network or on any mobile terminal within a mobile terminal group.

Optionally, in the present example, a storage medium may be set up to store program code for executing the steps below: acquiring the number of all unread messages corresponding to a designated object, comparing said number to a preset threshold value; summarizing first message content of said all unread messages when said number is greater than the preset threshold value to obtain second message content, wherein the number of bytes of said second message content is less than that of said first message content; and displaying said second message content.

Optionally, said storage medium may further be set up to store program code for executing the steps below: displaying said second message content in a designated display area of the communication record interface where said designated object is located, wherein said designated display area is a display area overlapping said communication record interface.

Optionally, said storage medium may further be set up to store program code for executing the steps below: receiving in said designated display area an operating instruction directed at said all unread messages, and performing, in accordance with said operating instruction, an operation that corresponds to said operating instruction and is directed at said all unread messages.

Optionally, said storage medium may further be set up to store program code for executing the steps below: replying to said all unread messages, adjusting the unread status or read status of said all unread messages, and evaluating said all unread messages.

Optionally, said storage medium may further be set up to store program code for executing the steps below: receiving a user trigger instruction for the count icon of said all unread messages, wherein the trigger instruction is for triggering display of said designated display area.

Optionally, said storage medium may further be set up to store program code for executing the steps below: displaying the number of posted messages of a designated message-posting object in said group object in said designated display area, wherein said designated message-posting object comprises the message-posting object with the highest priority level in said group object or the N message-posting objects with the most posted messages in said group object, wherein N is a natural number no less than 1.

Optionally, said storage medium may further be set up to store program code for executing the steps below: displaying said first message content in said designated display area when said number is less than a preset threshold value.

Optionally, said storage medium may further be set up to store program code for executing the steps below: receiving in said designated display area a selection instruction for first message content of said all unread messages; determining, in accordance with said selection instruction, the first message content displayed in said designated display area.

Optionally, said storage medium may further be set up to store program code for executing the steps below: receiving a tap or click instruction from the user for another area in said communication record interface, wherein said other area is an area other than said designated display area on said communication record interface; closing said designated display area when triggered by said tap or click instruction.

In the present example, a storage medium may be set up to store program code for executing the following steps: acquiring unread messages from dialog messages; summarizing said unread messages to obtain summarized message content of said unread messages; presenting said summarized message content to a user.

Optionally, said storage medium may further be set up to store program code for executing the steps below: displaying said summarized message content in a designated display area of the communication record interface where a designated object is located, wherein said designated display area is a display area overlapping said communication record interface.

Optionally, said storage medium may further be set up to store program code for executing the steps below: receiving in said designated display area an operating instruction directed at said unread messages, and performing, in accordance with said operating instruction, an operation that corresponds to said operating instruction and is directed at said unread messages.

Optionally, said storage medium may further be set up to store program code for executing the steps below: determining the designated message-posting object in a group associated with dialog messages, wherein said designated message-posting object comprises the message-posting object with the highest priority level in said group object or the N message-posting objects with the most posted messages in said group object, wherein N is a natural number no less than 1; counting the number of messages posted in said group by said designated message-posting object; presenting the number of messages posted by said designated message-posting object.

Optionally, said storage medium may further be set up to store program code for executing the steps below: acquiring the number of unread messages of a group associated with said dialog messages; comparing said number to a preset threshold value; determining whether to trigger summarization of said unread messages based on the comparison result, wherein summarization of said unread messages is triggered when said comparison result indicates that said number is greater than said preset threshold value.

The sequential numbers of the embodiments described above are merely descriptive and do not represent the relative superiority or inferiority of the embodiments.

In the present application embodiments described above, the description of each embodiment has its respective emphasis, and parts of an embodiment are not described in detail. One may refer to other embodiments for the relevant descriptions.

Please understand that, in several embodiments provided by the present application, the disclosed technical content may be implemented in other ways. The means embodiments described above are merely illustrative. For example, the division into said units is merely a division by logical function. When actually implemented, there may be other forms of division. For example, multiple units or components may be combined or integrated into another system, or some features might be omitted or not executed. Also, couplings or direct couplings or communication connections between things that are displayed or discussed may be through some interfaces. Indirect couplings or communication connections between units or modules may be electrical or otherwise.

Units described as separate components may or may not be physically separate, and components displayed as units may or may not be physical units. They can be located in one place, or they can be distributed across multiple network units. The embodiment schemes of the present embodiments can be realized by selecting part or all of the units in accordance with actual need.

In addition, each functional unit in each of the embodiments of the present application may be integrated into a processing unit, or each unit may have an independent physical existence. Or two or more units may be integrated into one unit. The integrated units described above may be implemented in the form of hardware, or they may be implemented in the form of software functional units.

If the integrated units are implemented in the form of software functional units and are sold or used as independent products, they may be stored in computer-readable media. With such an understanding, it becomes clear that the technical schemes of the present application, whether intrinsically or those portions that contribute to the prior art, or all or part of the technical schemes, may be embodied in the form of software products. These computer software products are stored in a storage medium and comprise some instructions for causing a computer device (which could be a personal computer, a server, or a network device) to execute all or some of the steps in the methods described by the various embodiments of the present application. The storage medium described above encompasses: USB flash drives, read-only memory (ROM), random access memory (RAM), mobile hard drives, magnetic or optical disks, or various other media that can store program code.

## Claims

1. A computer terminal (10) implemented method of unread message display comprising:
acquiring (S202; S902), by a second acquiring module (1001), the number of all unread messages corresponding to a designated object, wherein messages associated with the designated object are associated with either read or unread statuses;
comparing (S204) said number to a preset threshold value;
when said number is greater than the preset threshold value, summarizing, by a summarizing module (1003), first message content of said all unread messages to obtain second message content, wherein the number of bytes of said second message content is less than that of said first message content.
displaying, by a presenting module (1005), said second message content,
wherein displaying said second message content comprises: displaying said second message content in a designated display area of a communication record interface where said designated object is located, wherein said designated display area is a display area overlapping said communication record interface, **characterized by**: after displaying said second message content, receiving in said designated display area an operating instruction directed at said all unread messages, and performing, in accordance with said operating instruction, an operation that corresponds to said operating instruction and is directed at said all unread messages, wherein said designated display area comprises a touch display device;
further **characterized in that**: performing, in accordance with said operating instruction, an operation that corresponds to said operating instruction and is directed at said all unread messages includes at least one of the following:
replying to said all unread messages, adjusting the unread status or read status of said all unread messages, and evaluating said all unread messages.

2. The method as described in claim 1, **characterized in that**, prior to displaying said second message content in said designated display area of said communication record interface where said designated object is located, said method further comprises:
receiving a user trigger instruction for the count icon of said all unread messages, wherein said user trigger instruction is for triggering display of said designated display area.

3. The method as described in claim 1, **characterized in that** said designated object comprises: a group object; when displaying said second message content in said designated display area of said communication record interface where said designated object is located, said method further comprises:
displaying the number of posted messages of a designated message-posting object in said group object in said designated display area, wherein said designated message-posting object comprises the message-posting object with the highest priority level in said group object or the N message-posting objects with the most posted messages in said group object, wherein N is a natural number no less than 1, wherein a priority level associated with a message-posting object in the group object is determined based on one or more of the following: whether the message-posting object is associated with a group administrator and a first set priority level associated with the group administrator, whether the message-posting object is associated with a general manager and a second set priority level associated with the general manager, whether the message-posting object is associated with an executive and a third set priority level associated with the executive.

4. The method as described in claim 1, **characterized in that** said method further comprises:
displaying said first message content in said designated display area when said number is less than said preset threshold value.

5. The method as described in claim 4, **characterized in that**, when displaying said first message content in said designated display area, said method further comprises:
receiving in said designated display area a selection instruction for said first message content of said all unread messages; and
determining, in accordance with said selection instruction, said first message content displayed in said designated display area.

6. The method as described in any of claims 1 to 5, **characterized in that**, after displaying said second message content in said designated display area of said communication record interface where said designated object is located, said method further comprises:
receiving a tap or click instruction from the user for another area on said communication record interface, wherein said other area is an area other than said designated display area on said communication record interface; closing said designated display area when triggered by said tap or click instruction; and
closing said designated display area when triggered by said tap or click instruction.

7. A processor operative to execute processor implementable instructions which, when executed, cause the processor to implement the method of any of claims 1 to 6.

8. A terminal (10), **characterized in that** it comprises a processor according to claim 7.

## Patentansprüche

1. Verfahren implementiert auf einem Computerendgerät (10) zum Anzeigen ungelesener Meldungen, umfassend:
Erfassen (S202; S902), durch ein zweites Erfassungsmodul (1001), der Anzahl aller ungelesener Meldungen entsprechend einem vorgesehenen Thema, wobei mit dem vorgesehenen Thema assoziierte Meldungen mit entweder gelesenen oder ungelesenen Status assoziiert sind;
Vergleichen (S204) der Anzahl mit einem vorherbestimmten Schwellenwert;
wenn die Anzahl größer als der vorherbestimmte Schwellenwert ist, Zusammenfassen, durch ein Zusammenfassungsmodul (1003), von erstem Meldungsinhalt aller ungelesener Meldungen, um einen zweiten Meldungsinhalt zu erhalten, wobei die Anzahl von Bytes des zweiten Meldungsinhalts kleiner als jene des ersten Meldungsinhalts ist;
Anzeigen, durch ein Präsentationsmodul (1005), des zweiten Meldungsinhalts,
wobei das Anzeigen des zweiten Meldungsinhalts Folgendes umfasst: Anzeigen des zweiten Meldungsinhalts in einem vorgesehenen Anzeigebereich einer Kommunikationsaufzeichnungsoberfläche, wo das vorgesehene Thema platziert ist, wobei der vorgesehene Anzeigebereich ein Anzeigebereich ist, der mit der Kommunikationsaufzeichnungsoberfläche überlappt, **gekennzeichnet durch**: nach Anzeigen des zweiten Meldungsinhalts Empfangen im vorgesehenen Anzeigebereich einer an alle ungelesenen Meldungen gerichteten Arbeitsinstruktion und Durchführen gemäß der Arbeitsinstruktion einer Operation, die der Arbeitsinstruktion entspricht und an alle ungelesenen Meldungen gerichtet ist, wobei der vorgesehene Anzeigebereich eine Touch-Anzeigevorrichtung umfasst;
ferner **dadurch** gekennzeichnet dass: das Durchführen gemäß der Arbeitsinstruktion einer Operation, die der Arbeitsinstruktion entspricht und an alle ungelesenen Meldungen gerichtet ist, mindestens eines der Folgenden einschließt:
Antworten auf alle ungelesenen Meldungen, Adjustieren der ungelesenen Status oder gelesenen Status aller ungelesenen Meldungen und Auswerten aller ungelesenen Meldungen.

2. Verfahren nach Anspruch 1, **dadurch gekennzeichnet, dass** vor dem Anzeigen des zweiten Meldungsinhalts im vorgesehenen Anzeigebereich der Kommunikationsaufzeichnungsoberfläche, wo das vorgesehene Thema platziert ist, das Verfahren ferner Folgendes umfasst:
Empfangen einer Benutzer-Triggerinstruktion für das Zählsymbol aller ungelesenen Meldungen, wobei die Benutzer-Triggerinstruktion zum Veranlassen der Anzeige des vorgesehenen Anzeigebereichs dient.

3. Verfahren nach Anspruch 1, **dadurch gekennzeichnet, dass** das vorgesehene Thema Folgendes umfasst: ein Gruppenthema; wobei beim Anzeigen des zweiten Meldungsinhalts im vorgesehenen Anzeigebereich der Kommunikationsaufzeichnungsoberfläche, wo das vorgesehene Thema platziert ist, das Verfahren ferner Folgendes umfasst:
Anzeigen der Anzahl von eingesandten Meldungen eines vorgesehenen Meldungseinsendethemas im Gruppenthema im vorgesehenen Anzeigebereich, wobei das vorgesehene Meldungseinsendethema das Meldungseinsendethema mit der höchsten Prioritätsstufe im Gruppenthema oder die N Meldungseinsendethemen mit den meisten eingesandten Meldungen im Gruppenthema umfasst, wobei N eine natürliche Zahl nicht kleiner als 1 ist, wobei eine mit einem Meldungseinsendethema im Gruppenthema assoziierte Prioritätsstufe auf der Basis eines oder mehrerer der Folgenden bestimmt wird: ob das Meldungseinsendethema mit einem Gruppenadministrator und einer ersten eingestellten mit dem Gruppenadministrator assoziierten Prioritätsstufe assoziiert ist, ob das Meldungseinsendethema mit einem allgemeinen Manager und einer zweiten eingestellten mit dem allgemeinen Manager assoziierten Prioritätsstufe assoziiert ist, ob das Meldungseinsendethema mit einem Geschäftsführer und einer dritten eingestellten mit dem Geschäftsführer assoziierten Prioritätsstufe assoziiert ist.

4. Verfahren nach Anspruch 1 **dadurch gekennzeichnet, dass** das Verfahren ferner Folgendes umfasst:
Anzeigen des ersten Meldungsinhalts im vorgesehenen Anzeigebereich, wenn die Anzahl kleiner als der vorherbestimmte Schwellenwert ist.

5. Verfahren nach Anspruch 4, **dadurch gekennzeichnet, dass** beim Anzeigen des ersten Meldungsinhalts im vorgesehenen Anzeigebereich das Verfahren ferner Folgendes umfasst:
Empfangen im vorgesehenen Anzeigebereich einer Auswahlinstruktion für den ersten Meldungsinhalt aller ungelesenen Meldungen; und
Bestimmen gemäß der Auswahlinstruktion des ersten Meldungsinhalts, der im vorgesehenen Anzeigebereich angezeigt wird.

6. Verfahren nach einem der Ansprüche 1 bis 5, **dadurch gekennzeichnet, dass** nach dem Anzeigen des zweiten Meldungsinhalts im vorgesehenen Anzeigebereich der Kommunikationsaufzeichnungsoberfläche, wo das vorgesehene Thema platziert ist, das Verfahren ferner Folgendes umfasst:
Empfangen einer Tipp- oder Klickinstruktion vom Benutzer für einen anderen Bereich auf der Kommunikationsaufzeichnungsoberfläche, wobei der andere Bereich ein anderer Bereich als der vorgesehene Anzeigebereich auf der Kommunikationsaufzeichnungsoberfläche ist; Schließen des vorgesehenen Anzeigebereichs, wenn dies durch die Tipp- oder Klickinstruktion veranlasst wird; und
Schließen des vorgesehenen Anzeigebereichs, wenn dies durch die Tipp- oder Klickinstruktion veranlasst wird.

7. Prozessor, der betriebsfähig ist zum Ausführen von prozessorimplementierbaren Instruktionen, welche bei Ausführung den Prozessor veranlassen, das Verfahren nach einem der Ansprüche 1 bis 6 zu implementieren.

8. Endgerät (10), **dadurch gekennzeichnet, dass** es einen Prozessor nach Anspruch 7 umfasst.

## Revendications

1. Procédé d'affichage de messages non lus, mis en oeuvre par un terminal informatique (10), comprenant les étapes consistant à :
acquérir (S202 ; S902), par un second module d'acquisition (1001), le nombre d'une totalité de messages non lus correspondant à un objet désigné, des messages associés à l'objet désigné étant associés à des statuts « lu » ou « non lu » ;
comparer (S204) ledit nombre à une valeur seuil prédéfinie ;
lorsque ledit nombre est supérieur à la valeur seuil prédéfinie, synthétiser, par un module de synthèse (1003), un premier contenu de message de ladite totalité de messages non lus afin d'obtenir un second contenu de message, le nombre d'octets dudit second contenu de message étant inférieur à celui dudit premier contenu de message ;
afficher, par un module de présentation (1005), ledit second contenu de message,
l'affichage dudit second contenu de message comprenant l'étape consistant à :
afficher ledit second contenu de message dans une zone d'affichage désignée d'une interface d'enregistrement de communication où se trouve ledit objet désigné, ladite zone d'affichage désignée étant une zone d'affichage chevauchant ladite interface d'enregistrement de communication, le procédé étant **caractérisé par** les étapes consistant à : après l'affichage dudit second contenu de message, recevoir, dans ladite zone d'affichage désignée, une instruction opérationnelle dirigée vers ladite totalité de messages non lus et réaliser, selon ladite instruction opérationnelle, une opération qui correspond à ladite instruction opérationnelle et qui est dirigée vers ladite totalité de messages non lus, ladite zone d'affichage désignée comprenant un dispositif d'affichage tactile ;
le procédé étant **caractérisé en outre en ce que** : la réalisation, selon ladite instruction opérationnelle, d'une opération qui correspond à ladite instruction opérationnelle et qui est dirigée vers ladite totalité de messages non lus comprend au moins l'une des étapes suivantes consistant à :
répondre à ladite totalité de messages non lus, régler le statut « non lu » ou le statut « lu » de ladite totalité de messages non lus et évaluer ladite totalité de messages non lus.

2. Procédé selon la revendication 1, ledit procédé étant **caractérisé en ce qu'**il comprend en outre, avant l'affichage dudit second contenu de message dans ladite zone d'affichage désignée de ladite interface d'enregistrement de communication où se trouve ledit objet désigné, l'étape consistant à :
recevoir une instruction de déclenchement de l'utilisateur pour l'icône de comptage de ladite totalité de messages non lus, ladite instruction de déclenchement de l'utilisateur étant destinée à déclencher l'affichage de ladite zone d'affichage désignée.

3. Procédé selon la revendication 1, **caractérisé en ce que** ledit objet désigné comprend :
un objet de groupe ; ledit procédé comprenant en outre, lors de l'affichage dudit second contenu de message dans ladite zone d'affichage désignée de ladite interface d'enregistrement de communication où se trouve ledit objet désigné, l'étape consistant à :
afficher le nombre de messages publiés d'un objet de publication de messages désigné dans ledit objet de groupe dans ladite zone d'affichage désignée, ledit objet de publication de messages désigné comprenant l'objet de publication de messages ayant le niveau de priorité le plus élevé dans ledit objet de groupe ou les N objets de publication de messages ayant le plus de messages publiés dans ledit objet de groupe, N étant un nombre naturel non inférieur à 1, un niveau de priorité associé à un objet de publication de messages dans l'objet de groupe étant déterminé sur la base d'une ou plusieurs des conditions suivantes : si l'objet de publication de messages est associé à un administrateur de groupe et à un premier niveau de priorité défini associé à l'administrateur de groupe, si l'objet de publication de messages est associé à un directeur général et à un deuxième niveau de priorité défini associé au directeur général, et si l'objet de publication de messages est associé à un cadre et à un troisième niveau de priorité défini associé au cadre.

4. Procédé selon la revendication 1, ledit procédé étant **caractérisé en ce qu'**il comprend en outre l'étape consistant à :
afficher ledit premier contenu de message dans ladite zone d'affichage désignée lorsque ledit nombre est inférieur à ladite valeur seuil prédéfinie.

5. Procédé selon la revendication 4, ledit procédé étant **caractérisé en ce qu'**il comprend en outre, lors de l'affichage dudit premier contenu de message dans ladite zone d'affichage désignée, les étapes consistant à :
recevoir, dans ladite zone d'affichage désignée, une instruction de sélection pour ledit premier contenu de message de ladite totalité de messages non lus ; et
déterminer, selon ladite instruction de sélection, ledit premier contenu de message affiché dans ladite zone d'affichage désignée.

6. Procédé selon l'une quelconque des revendications 1 à 5, ledit procédé étant **caractérisé en ce qu'**il comprend en outre, après l'affichage dudit second contenu de message dans ladite zone d'affichage désignée de ladite interface d'enregistrement de communication où se trouve ledit objet désigné, les étapes consistant à :
recevoir une instruction de tapotement ou de clic en provenance de l'utilisateur pour une autre zone sur ladite interface d'enregistrement de communication, ladite autre zone étant une zone autre que ladite zone d'affichage désignée sur ladite interface d'enregistrement de communication ; fermer ladite zone d'affichage désignée en cas de déclenchement par ladite instruction de tapotement ou de clic ; et
fermer ladite zone d'affichage désignée en cas de déclenchement par ladite instruction de tapotement ou de clic.

7. Processeur fonctionnel pour exécuter des instructions qui peuvent être mises en oeuvre par processeur et qui, lorsqu'elles sont exécutées, amènent le processeur à mettre en oeuvre le procédé selon l'une quelconque des revendications 1 à 6.

8. Terminal (10), **caractérisé en ce qu'**il comprend un processeur selon la revendication 7.
